# EUROPÄISCHE PATENTANMELDUNG

(11) **EP 1 104 978 A1**
(43) Veröffentlichungstag der Anmeldung: **06.06.2001**
(21) Anmeldenummer: 99123766.0
(22) Anmeldetag: 30.11.1999
(51) Int. Cl.: H04Q 7/38

(54) **Verfahren und Vorrichtung zur Anwahl von Diensten**

(71) Anmelder: TELEFONAKTIEBOLAGET LM ERICSSON (publ), 126 25 Stockholm (SE)
(72) Erfinder: Kaibel, Martin, 52070 Aachen (DE); Keutmann, Heinz-Peter, 52249 Eschweiler (DE); Kobriger, Peter, 52072 Aachen (DE)
(74) Vertreter: Mohsler, Gabriele

(57) **Zusammenfassung**

Die Erfindung betrifft ein Verfahren und Vorrichtungen zur Anwahl von Diensten in einem mobilen Telekommunikationsnetz. Dabei wird ein eingegebener Rufwunsch zu einem Dienst in einem Endgerät in eine Dienstidentifikation umgesetzt. Anschließend wird diese Dienstidentifikation zu einem Netzknoten eines Telekommunikationsnetzes übertragen. In diesem Netzknoten wird die Dienstkategorie in eine Rufnummer übersetzt. Mit dieser Rufnummer wird eine Verbindung zu dem gerufenen Dienst aufgebaut.

## Beschreibung

Die Erfindung betrifft ein Verfahren und Vorrichtungen zur Anwahl von Diensten in einem mobilen Telekommunikationsnetz.

Viele Teilnehmer mobiler Telekommunikationsnetze, beispielsweise einem GSM (Global System for Mobile communication) oder einem UMTS (Universal Mobile Telecommunication System) Netz, nutzen Dienste die von Netzbetreibern oder Dritten angeboten werden. Beispiele für derartige Dienste sind Auskunftdienste, Börseninformationsdienste, Fahrplaninformationen oder Notrufdienste wie Polizeinotrufe oder Rettungsdienste. Ein Dienst im Sinne der Anmeldung kann auch eine international arbeitende oder international bekannte Organisation oder Privatperson sein, oder ein Dienst, der in vergleichbarer Weise in einer Mehrzahl von Netzen angeboten wird. In vielen Fällen ist es wünschenswert, einen Dienst anzurufen ohne die Rufnummer des Dienstes zu kennen oder sie ermitteln zu müssen. Eine derartige Situation kann sich beispielsweise einstellen, wenn ein Teilnehmer bei Ende einer Veranstaltung verschiedene alternative
Transportmöglichkeiten überprüfen möchte. Hier ist es wenig wünschenswert, erst eine Vielzahl von Rufnummern über eine Auskunft erfragen und merken zu müssen. Im Falle eines Notfalls tritt häufig die Situation ein, daß sich ein Beteiligter nicht mehr an die passende Notrufnummer erinnert. Auch hier erscheint es wenig sinnvoll erst die entsprechende Rufnummer ermitteln zu müssen.
Für Notrufdienste wird eine Vielzahl von Vereinfachungen angeboten, die es einem Teilnehmer ermöglichen, einen Notrufdienst ohne Kenntnis der Rufnummer zu erreichen. In dem Patent FI-9500335 wird eine Notrufvorrichtung vorgestellt, die bei der Bedienung einer einzigen Taste einen gewünschten Notrufdienst anwählt. In dem Gebrauchsmuster DE-29809959 wird eine vergleichbare Vorrichtung beschrieben, bei der ein Teilnehmer aus einer Mehrzahl von Notrufdiensten wählen kann. Beide Einrichtungen haben fest eingestellte Notrufnummern intern gespeichert und setzen somit voraus, daß ein Teilnehmer sich im Geltungsbereich der voreingestellten Nummern aufhält. Somit sind diese Einrichtungen nur in einem oder wenigen Telekommunikationsnetzen einsetzbar.

Demgemäß ist es Aufgabe der Erfindung, ein Verfahren und Vorrichtungen zu schaffen, die die Anwahl eines Dienstes in unterschiedlichen mobilen Telekommunikationsnetzen vereinheitlichen.

Dies wird erfindungsgemäß gelöst durch die Lehre des Anspruchs 1, die Lehre des Anspruchs 10, die Lehre des Anspruchs 14 und die Lehre des Anspruchs 19.

Als vorteilhaft erweist sich hierbei, daß ein Rufwunsch in eine Dienstidentifikation umgesetzt wird, dies ermöglicht die Verwendung aus dem Heimat-Telekommunikationsnetz bekannter Eingaben in einem beliebigen ausländischen Netz.

Ebenfalls vorteilhaft ist, daß Dienste international einheitlich anwählbar sind, ohne daß sich Teilnehmer Kenntnis einer lokalen Rufnummer benötigt. Somit kann der Teilnehmer auf einheitliche Weise weltweit einen Dienst anwählen. Dies gilt auch dann, wenn die Rufnummer eines Dienstes geändert wird

Weitere vorteilhafte Ausgestaltungen sind den Ansprüchen 2 bis 9, 11 bis 13, 15 bis 18 zu entnehmen. Vorteilhafte Verwendungen sind den Ansprüchen 18 und 19 zu entnehmen.

Vorteilhaft ist die Verwendung von Zeichenketten nach Anspruch 2, da diese Form der Eingabe von der überwiegenden Mehrheit der Teilnehmer verwendet wird.

Ebenfalls vorteilhaft ist die Erweiterung der Menge der vordefinierten Zeichenketten nach Anspruch 3, dies erlaubt die Verwendung von Zeichenketten die in einem besuchten Telekommunikationsnetz verwendet werden, was besonders für Teilnehmer hilfreich ist, die die Zeichenketten des besuchten Telekommunikationsnetzes gewohnt sind.

Besonders vorteilhaft ist die Entfernung von Zeichenketten nach Verlassen eines besuchten Telekommunikationsnetzes nach Anspruch 4, dies vermeidet unbeabsichtigte Notrufe von einem Telekommunikationsnetz in dem die entfernten Zeichenketten eine andere Bedeutung haben können.

Besonders vorteilhaft ist gemäß Anspruch 5, die Speicherung vordefinierter Zeichenketten auf einem Teilnehmeridentifizierungskarte etwa einer SIM (Subscriber Identification Module) oder PCMCIA (Personal Computer Memory Card International Association) Karte. Dadurch kann ein Endgerätetyp in einer Vielzahl von Netzen eingesetzt werden.

Vorteilhaft ist gemäß Anspruch 6, daß der umsetzende Knoten ein Steuerungsknoten eines Kernnetzes ist, da im allgemeinen diese Knoten für Vermittlungsaufgaben eingesetzt werden. Ein geeigneter Knoten ist zum Beispiel eine MSC (Mobile services Switching Centre) oder SGSN (Supporting General packet radio service Support Node).

Besonders vorteilhaft ist gemäß Anspruch 7, daß eine Teilnehmeridentifizierung übertragen wird, dies ermöglicht sowohl eine gezieltere Unterstützung des Teilnehmers als auch die Vermeidung unnötiger Diensteanrufe und eine verbesserte Dienstleitung durch den gerufenen Dienst.

Vorteilhaft ist die Ermittlung der bevorzugten Sprache anhand eines Sprachindikators nach Anspruch 8, da dieser Sprachindikator vom Teilnehmer selbst eingestellt wird, wird der Dienst in genau der Sprache angeboten, die der Teilnehmer sich für die Kommunikation mit seinem Endgerät ausgesucht hat.

Im folgenden werden Ausführungsbeispiele der Erfindung anhand von Figuren näher erläutert. Folgende Figuren zeigen:
- Fig. 1:: Schematisierter Ablauf des erfindungsgemäßen Verfahrens nach Anspruch 1,
- Fig. 2:: schematisierter Ablauf des erfindungsgemäßen Verfahrens nach Anspruch 2 bei zusätzlicher Übertragung eines Sprachindikators,
- Fig. 3:: schematische Darstellung einer Vorrichtung in einem Endgerät zur Umsetzung eines Rufwunsches zu einem Dienst,
- Fig. 4:: schematische Darstellung einer weiteren Vorrichtung in einem Endgerät zur Umsetzung eines Rufwunsches zu einem Dienst,
- Fig. 5:: schematische Darstellung einer Vorrichtung in einem Knoten eines Telekommunikationsnetzes zur Umsetzung eines Rufwunsches zu einem Dienst.

Ein Telekommunikationsnetz umfaßt im allgemeinen ein Zugangsnetz und ein Kernnetz. Ein Zugangsnetz ist ein Netz, das mindestens einem Teilnehmer den Zugang zu einem Kernnetz ermöglicht. Das Zugangsnetz verwaltet die dazu notwendigen Ressourcen wie beispielsweise Funkkanäle, Sende- und Empfangseinrichtungen sowie Verbindungen zum Kernnetz.
Ein Kernnetz umfaßt mindestens einem Steuerknoten. Es bietet einem Teilnehmer mindestens einen Telekommunikationsdienst wie Telefonie, Faksimile oder Datenübertragung. Darüber hinaus erledigt es Aufgaben wie Mobilitätsverwaltung und Teilnehmer-Authentisierung. Ein Steuerungsknoten ist eine Vorrichtung in einem Kernnetz, die mindestens eine der Funktionalitäten des Kernnetzes anbietet.

Eine Implementierung der Erfindung ist, den Inhalt einer gespeicherten Liste von Zeichenketten bei einem Wechsel des Telekommunikationsnetzes zu aktualisieren. Das Wechseln eines Telekommunikationsnetzes wird sowohl von einem Endgerät als auch von einem besuchten Netz durch die Erstanmeldung des Endgerätes im besuchten Netz erkannt. Ein Netzbetreiber kann somit die Liste von Zeichenketten in einem Endgerät durch Datenübertragung aktualisieren, beispielsweise durch Nutzung eines sogenannten SIM Application Toolkit. Der Netzbetreiber speichert Rufnummern, die in seinem Netz für Dienste definiert sind, in dem Endgerät. Diese Implementierung ermöglicht die Verwendung sowohl der Rufnummern, die im Heimatnetz eines Teilnehmers definiert sind, als auch die Verwendung der Rufnummern, die in einem besuchten Netz definiert sind. Ein Teilnehmer der das Endgerät verwendet kann somit zur Eingabe seines Rufwunsches sowohl die in seinem Heimatnetz als auch die im besuchten Netz übliche Zeichenkette verwenden. Ein Teilnehmer eines deutschen Netzes, der sich mit seinem Endgerät in England aufhält, hat somit beispielsweise zur Anwahl der Polizei die Wahl zwischen der, in England üblichen, Zeichenkette 999 und der, in Deutschland üblichen, Zeichenkette 110. Beim Verlassen des besuchten Telekommunikationsnetzes werden die dort üblichen Zeichenketten vorzugsweise entfernt. Dies verhindert ein unbeabsichtigtes Anwählen eines Dienstes. Im obengenannten Beispiel würde ansonsten der Versuch einen Teilnehmer mit der Anschlußnummer 99 93 24 zu erreichen zu einem Notruf führen.

Die Speicherung vordefinierter Rufwünsche und Zeichenketten kann auf einer Teilnehmeridentifizierungskarte oder auf einem fest eingebauten Speicherbaustein im Endgerät erfolgen.

Eine Identifizierung eines anrufenden Teilnehmers kann auch implizit erfolgen; dazu wird anstatt einer Teilnehmeridentifikation eine Endgeräteidentifikation, beispielsweise eine internationale Endgeräteidentifikation (International Mobile Equipment Identity), übertragen.

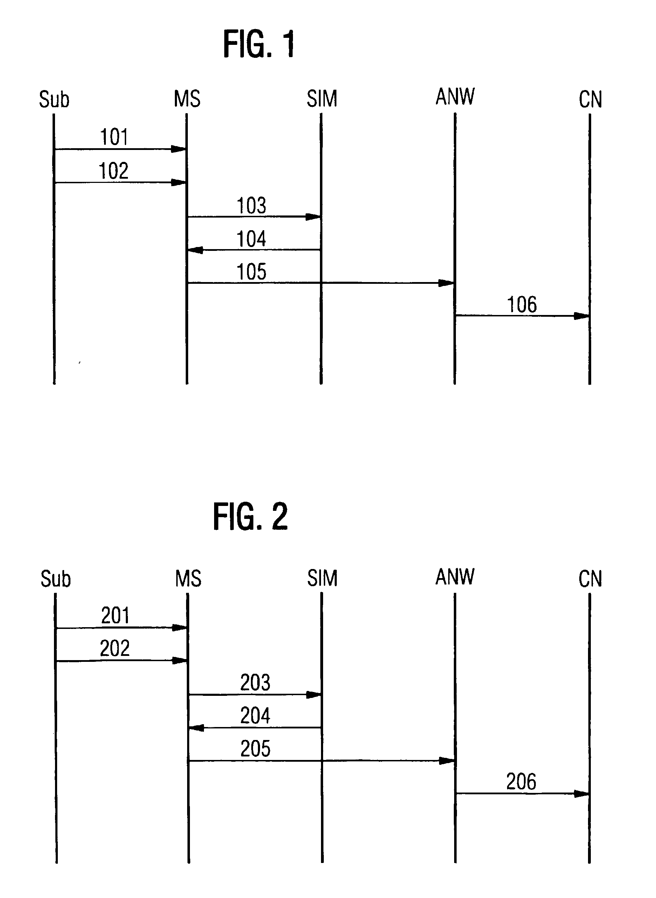

Im folgenden wird eine Ausgestaltung der Erfindung anhand von Figur 1 näher erläutert.
Bei einem Verfahren zur Anwahl eines Dienstes in einem mobilen Telekommunikationsnetz, gibt in einem ersten Schritt 101 ein Anrufer Sub einen Rufwunsch in ein Endgerät MS ein. Dies kann beispielsweise durch eine Auswahl aus einem vordefinierten Menü oder eine Spracheingabe erfolgen.
In einem weiteren Schritt 102 wird dieser Rufwunsch gegenüber dem Endgerät MS für vollständig erklärt. Dies kann in den genannten Beispielen beispielsweise durch das Drücken einer Taste oder durch Beendigung der Spracheingabe erfolgen. Das Endgerät setzt in seiner Verarbeitungseinheit zur Umsetzung eines Rufwunsches zu einem Dienst, den Rufwunsch in eine Dienstidentifikation um. Eine Dienstidentifikation ist eine Angabe, die einen Dienst in einer Auswahl von Diensten eindeutig identifiziert. Dies kann beispielsweise durch einen 8 Bit Parameter realisiert werden.
Die Speicherung von Rufwünschen und von Dienstidentifikationen sowie deren Zuordnung sind auf einer Teilnehmeridentifizierungskarte SIM in Form einer Tabelle realisiert. Die Speicherung und Zuordnung kann auch durch einen fest eingebauten Speicherbaustein mit flüchtigem oder nicht flüchtigem Speicherinhalt realisiert werden. Zur Verringerung von Zugriffszeiten werden häufig Informationen, die in einer Teilnehmeridentifizierungskarte gespeichert sind, in einen Speicherbaustein des Endgerätes kopiert. Die Verarbeitungseinheit zur Umsetzung eines Rufwunsches an einen Dienst schickt in einem weiteren Schritt 103 eine Anfrage an die Teilnehmeridentifizierungskarte SIM. Die Teilnehmeridentifizierungskarte gibt in einem nächsten Schritt 104 die entsprechenden Dienstidentifikation zurück.
In einem weiteren Schritt 105 übermittelt das Endgerät MS diese Dienstidentifikation mit seiner Sendeeinheit in einer Verbindungsanfrage an ein Zugangsnetz ANW.
Das Zugangsnetz ANW leitet diese Verbindungsanfrage mit der Dienstidentifikation in einem weiteren Schritt 106 an einen Steuerungsknoten CN eines Kernnetzes weiter. Der Steuerungsknoten CN setzt die Dienstidentifikation in eine Rufnummer um. Anschließend initiiert der Steuerungsknoten mit seinem Mittel zum Aufbau einer Verbindung den Verbindungsaufbau zu dem gerufenen Dienst.

Im folgenden wird eine Ausgestaltung der Erfindung anhand von Figur 2 näher erläutert.
Bei dem Verfahren zur Anwahl eines Dienstes in einem mobilen
Telekommunikationsnetz, gibt in einem ersten Schritt 201 ein Anrufer Sub einen Rufwunsch in ein Endgerät MS ein. Dies erfolgt durch eine Eingabe einer Zeichenkette in das Endgerät MS, beispielsweise über eine Tastatur oder durch eine Spracheingabe.
In einem weiteren Schritt 202 wird dieser Rufwunsch gegenüber dem Endgerät MS, beispielsweise durch das Drücken einer Taste oder durch Verwendung eines vordefinierten Sprachsignals, für vollständig erklärt. Das Endgerät vergleicht in seiner Verarbeitungseinheit zur Umsetzung von Zeichenketten in
Dienstidentifikationen die eingegebene Zeichenkette mit einer Liste von vordefinierten Zeichenketten. Wird die eingegebene Zeichenkette in der Liste gefunden, wird sie von der Verarbeitungseinheit zur Umsetzung in eine Dienstidentifikation umgesetzt. Der Speicher zur Speicherung von Zeichenketten und zur Speicherung von Dienstidentifikationen sowie eine Zuordnungsvorschrift von Zeichenketten zu Dienstidentifikationen sind auf einer
Teilnehmeridentifizierungskarte SIM in Form einer Tabelle gespeichert. Der Speicher kann auch durch einen fest im Endgerät eingebauten Speicherbaustein mit flüchtigem oder nicht flüchtigem Speicherinhalt umgesetzt werden. Zur Umsetzung schickt die Verarbeitungseinheit zur Umsetzung eine Anfrage in einem weiteren Schritt 203 an die Teilnehmeridentifizierungskarte SIM. Es ist Stand der Technik, daß beispielsweise ein Teilnehmer eines GSM Netzes in seinem Endgerät eine bevorzugte Sprache für Anzeigen des Gerätes einstellt. Diese Einstellung wird auf der Teilnehmeridentifizierungskarte gespeichert. Aus den Spracheinstellungen, die auf der Teilnehmeridentifizierungskarte gespeichert sind, wird ein Sprachindikator abgeleitet.
Die Teilnehmeridentifizierungskarte SIM antwortet auf die Anfrage in Schritt 203 in einem weiteren Schritt 204 mit der entsprechenden Dienstidentifikation und dem Sprachindikator. In einem weiteren Schritt 205 übermittelt das Endgerät MS diese Dienstidentifikation und den Sprachindikator in einer Verbindungsanfrage an ein Zugangsnetz ANW.
Das Zugangsnetz ANW leitet diese Verbindungsanfrage mit der Dienstidentifikation und dem Sprachindikator in einem weiteren Schritt 206 an einen Steuerungsknoten CN eines Kernnetzes weiter. Der Steuerungsknoten CN setzt die empfangene Dienstidentifikation, in seiner Verarbeitungseinheit zur Umsetzung von Dienstidentifikationen zu Rufnummern, in eine Rufnummer um, unter der der gewählte Dienst in der bevorzugten Sprache erreichbar ist. Dazu wird eine Liste von Rufnummern unter einer Dienstidentifikation gespeichert, wobei jede Rufnummer einer Sprache zugeordnet ist. Findet sich die vom Teilnehmer bevorzugte Sprache in dieser Liste, wird eine entsprechende Rufnummer verwendet, falls nicht, so wird eine erste Rufnummer der Liste verwendet. Anschließend startet der Steuerungsknoten mit seinem Mittel zum Aufbau einer Verbindung den Aufbau einer Verbindung zu dem gerufenen Dienst.

In dem Fall, daß kein Sprachindikator übermittelt wird, erfolgt die Ermittlung einer bevorzugten Sprache aus der Teilnehmeridentifikation. Eine Teilnehmeridentifikation enthält unter anderem eine Länderkennung eines Heimat-Telekommunikationsnetzes des identifizierten Teilnehmers, in GSM Netzen beispielsweise einen sogenannten mobile country code. Als bevorzugte Sprache wird dann eine Amtssprache des Landes angenommen.

Für den Fall eines Dienstanrufes mit einem Endgerät, das keine Teilnehmeridentifizierungskarte enthält, werden die Dienstidentifikationen und Rufwünschen sowie die Zuordnung von Dienstidentifikationen zu Rufwünschen in einem Speicherbaustein mit nicht flüchtigem Speicherinhalt gespeichert, das heißt in einem Speicherbaustein, der seinen Inhalt auch nach Unterbrechen der Spannungsversorgung erhält.

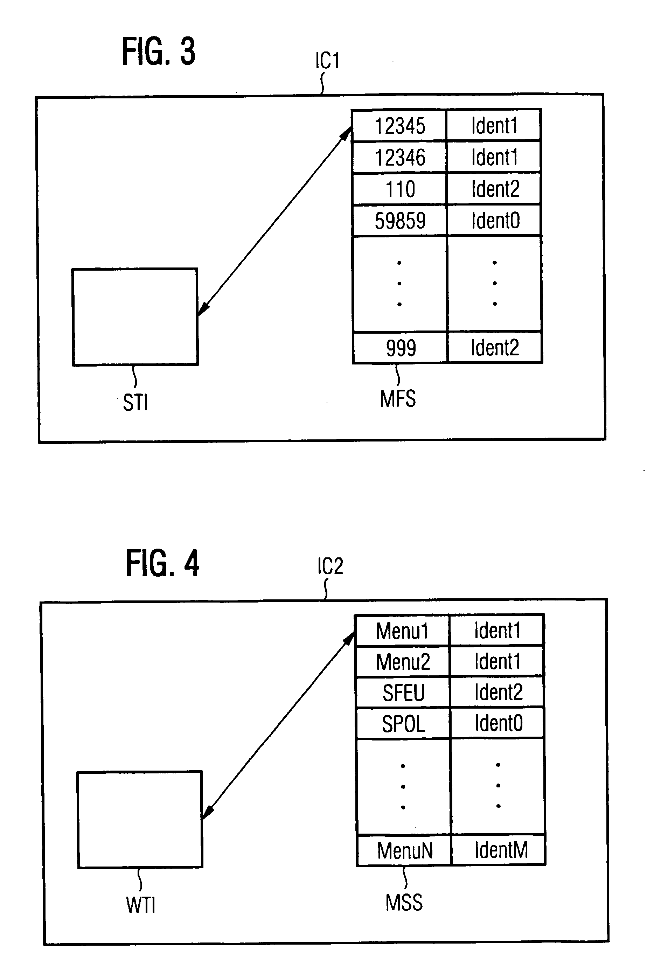

Im folgenden wird eine Ausgestaltung der Erfindung anhand von Figur 3 erläutert. Figur 3 zeigt einen Schaltkreis IC1. Mit diesem Schaltkreis IC1 wird eine Verarbeitungseinheit zur Umsetzung eines Rufwunsches zu einem Dienst in einem Endgerät umgesetzt. Der Schaltkreis IC enthält einen Speicher MFS, der sowohl vordefinierte Zeichenketten als auch Dienstidentifikationen in Zuordnung zueinander enthält. Der Speicher MFS speichert beispielsweise die Zeichenketten 12345, 12346, 110, 59859, bis 999 und die Dienstidentifikationen Ident0, Ident1 und Ident2. In einer vereinfachten Ausführungsform kann der Speicher MFS auch lediglich eine oder mehrere Dienstidentifikationen enthalten. Dabei ist jeder Zeichenkette die jeweils rechts davon abgebildete Dienstidentifikation zugeordnet. Der Schaltkreis IC1 enthält zusätzlich eine Empfangs- und Verarbeitungseinheit STI zum Empfang und Vergleichen von Zeichenketten. Wird eine Zeichenkette in das Endgerät eingegeben vergleicht die Verarbeitungseinheit STI diese Zeichenkette mit den im Speicher MFS gespeicherten Zeichenketten. Im Fall einer Übereinstimmung, sendet es die entsprechende Dienstidentifikation zurück. Dies bedeutet, daß der Anrufer einen Dienstanruf tätigen möchte. In diesem Fall wird die Dienstidentifikation an Telekommunikationsnetz übertragen, beispielsweise in einer Verbindungsanforderung. Der Anruf erhält gegebenenfalls Priorität, beispielsweise wenn der gerufene Dienst eine Notrufzentrale ist. Findet sich keine übereinstimmende Zeichenkette, wird der Rufwunsch als gewöhnlicher Anruf weiterbehandelt. Die Verarbeitungseinheit kann auch als Computerprogramm in einem Endgerät umgesetzt werden.

Im folgenden wird eine Ausgestaltung der Erfindung, die eine Menüauswahl oder eine sprachgesteuerte Auswahl von Diensten gestattet, anhand von Figur 4 erläutert. Figur 4 zeigt einen Schaltkreis IC2 mit dem in einem Endgerät eine Verarbeitungseinheit zur Umsetzung von Rufwünschen zu einem Dienst realisiert wird. Der Schaltkreis IC2 enthält einen Speicher MSS, der sowohl vordefinierte Rufwünsche als auch Dienstidentifikationen in Zuordnung zueinander enthält. Der Speicher MSS enthält beispielsweise die Rufwünsche Menu1, Menu2, SFEU, SPOL und MenuN sowie die Dienstidentifikationen Ident0, Ident1, Ident2 und IdentN. Dabei ist jedem Rufwunsch die jeweils nebenstehend abgebildete Dienstidentifikation zugeordnet. Der Schaltkreis IC2 enthält weiterhin eine Empfangs- und Verarbeitungseinheit WTI zum Empfang und Vergleich von Rufwünschen. Wird ein Rufwunsch in das Endgerät eingegeben, sucht die Verarbeitungseinheit WTI diesen Rufwunsch unter den im Speicher MSS gespeicherten Rufwünschen aus und übermittelt die zugehörige Dienstidentifikation an ein Telekommunikationsnetz, beispielsweise in einer Verbindungsanforderung. Der Anruf erhält gegebenenfalls Priorität, beispielsweise wenn der gerufene Dienst eine Notrufzentrale ist. Die Verarbeitungseinheit kann auch als Computerprogramm in einem Endgerät umgesetzt werden.

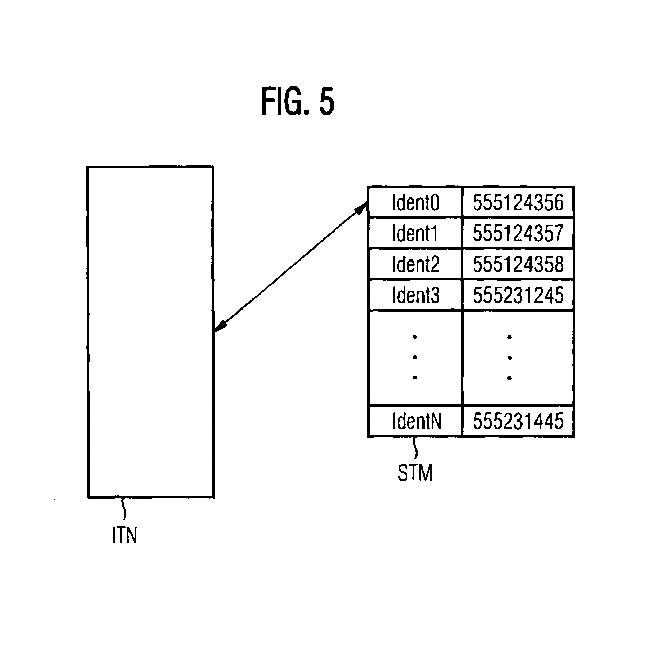

Im folgenden wird eine Ausgestaltung der Erfindung anhand von Figur 5 erläutert. Figur 5 zeigt ein Softwaremodul ITN in einem Netzknoten, das zusammen mit einem Speicher STM eine Verarbeitungseinheit zur Umsetzung eines Rufwunsches zu einem Dienst darstellt. Der Speicher STM enthält sowohl Dienstidentifikationen als auch Rufnummern in Zuordnung zueinander. Der Speicher enthält zum Beispiels die Dienstidentifikationen Ident0, Ident1, Ident2, Ident3 und IdentN und die Rufnummern 555124356, 555124357, 555124358, 555231245 und 555231445. Dabei ist jeder Dienstidentifikation die jeweils nebenstehend abgebildete Rufnummer zugeordnet. Wird dem Knoten beispielsweise die Dienstidentifikation Identlübermittelt, ermittelt das Softwaremodul ITN anhand dieser Dienstidentifikation die Rufnummer 555124357 des gewünschten Dienstes aus dem Speicher STM. Anschließend beginnt der Knoten mit dem Aufbau einer Verbindung zu dem gerufenen Dienst anhand der ermittelten Rufnummer.

Die Erfindung ist für sämtliche in der Beschreibungseinleitung genannten Dienste geeignet. Das erfindungsgemäße Verfahren ist für mobile Telekommunikationsnetze wie zum Beispiel GSM und UMTS Netze in besonderem Maße geeignet.

Im folgenden werden ein einfindungsgemäßes Endgerät und ein Knoten ohne Figur näher erläutert.
Das erfindungsgemäße Endgerät enthält eine Einheit zur Eingabe eines Rufwunsches, beispielsweise eine Tastatur, oder eine Einheit zur Verarbeitung von Spracheingaben oder eine menügesteuerte Eingabeeinheit, einen Speicher zur Speicherung mindestens einer Dienstidentifikation, eine Verarbeitungseinheit zur Umsetzung des Rufwunsches in eine dem Rufwunsch zugeordnete Dienstidentifikation und eine Sendeeinheit zum Senden der zugeordneten Dienstidentifikation.

Der erfindungsgemäße Knoten für ein Telekommunikationsnetz enthält zumindest eine Empfangseinheit zum Empfangen einer Dienstidentifikation, einen Speicher zur Speicherung mindestens einer Rufnummer, eine Verarbeitungseinheit zur Umsetzung der Dienstidentifikation in eine der Dienstidentifikation zugeordnete Rufnummer und Mittel zum Aufbau einer Verbindung zu dem der Rufnummer zugeordneten Dienst.
Ein Knoten für ein Telekommunikationsnetz kann eine Erkennungseinheit zur Erkennung einer Länderkennung aus einer Teilnehmeridentifikation und eine Zuordnungseinheit zur Zuordnung von Rufnummern zu Länderkennungen enthalten.

## Patentansprüche

1. Verfahren zur Anwahl eines Dienstes in einem mobilen Telekommunikationsnetz, mit folgenden Schritten:
- Eingabe eines Rufwunsches in ein Endgerät,
- Umsetzung des Rufwunsches in eine Dienstidentifikation in dem Endgerät,
- Übermittlung der Dienstidentifikation von dem Endgerät zu einem Knoten des Telekommunikationsnetzes,
- Umsetzung der Dienstidentifikation in eine Rufnummer in dem Knoten des Telekommunikationsnetzes, und
- Verbindungsaufbau zu dem der Rufnummer zugeordneten Dienst.

2. Verfahren nach Anspruch 1, bei dem
die Eingabe des Rufwunsches durch eine Eingabe einer Zeichenkette in das Endgerät erfolgt und bei dem, zur Umsetzung des Rufwunsches in die Dienstidentifikation ein Vergleich der eingegebenen Zeichenkette mit vordefinierten Zeichenketten und bei Übereinstimmung der eingegebenen Zeichenkette mit einer vordefinierten Zeichenkette eine Ermittlung der dieser Zeichenkette zugeordneten Dienstidentifikation durchgeführt wird.

3. Verfahren nach Anspruch 2, bei dem
eine Menge in einem Endgerät gespeicherter, vordefinierter Zeichenketten um in einem besuchten Telekommunikationsnetz zur Erreichung von Diensten verwendete Zeichenketten vergrößert wird, wenn das Endgerät in ein besuchtes Telekommunikationsnetz wechselt.

4. Verfahren nach Anspruch 2 oder 3, bei dem
die Menge der in dem Endgerät gespeicherten, vordefinierten Zeichenketten um, in einem besuchten Telekommunikationsnetz zur Erreichung von Diensten verwendete, Zeichenketten vermindert wird, wenn das Endgerätes das besuchte Telekommunikationsnetz verläßt.

5. Verfahren nach einem der Ansprüche 2, 3 oder 4,
bei dem vordefinierte Zeichenketten auf einer Teilnehmeridentifizierungskarte gespeichert werden.

6. Verfahren nach einem der Ansprüche 1 bis 5,
bei dem der Knoten des Telekommunikationsnetzes ein Steuerungsknoten eines Kernnetzes des Telekommunikationsnetzes ist.

7. Verfahren nach einem der Ansprüche 1 bis 6,
bei dem eine Identifikation des rufenden Teilnehmers übertragen wird und bei dem anhand der Identifikation des rufenden Teilnehmers eine bevorzugte Sprache für den gerufenen Dienst ermittelt wird.

8. Verfahren nach einem der Ansprüche 1 bis 6,
bei dem zusätzlich ein Sprachindikator vom Endgerät zum Knoten übertragen wird und anhand des Sprachindikators eine bevorzugte Sprache für den gerufenen Dienst ermittelt wird.

9. Verfahren nach einem der Ansprüche 1 bis 8,
bei dem der gerufene Dienst ein Notrufdienst ist.

10. Endgerät, mit
- einer Einheit zur Eingabe eines Rufwunsches,
- einem Speicher zur Speicherung einer Dienstidentifikation,
- einer Verarbeitungseinheit zur Umsetzung des Rufwunsches in eine dem Rufwunsch zugeordnete Dienstidentifikation und
- einer Sendeeinheit zum Senden der zugeordneten Dienstidentifikation.

11. Endgerät nach Anspruch 11,
bei dem Dienstidentifikationen Zeichenketten zugeordnet sind.

12. Endgerät nach Anspruch 12,
bei dem eine gespeicherte Menge von Zeichenketten um in einem besuchten Telekommunikationsnetz zur Erreichung von Diensten verwendete Zeichenketten vergrößert wird, wenn das Endgerät in das besuchte Telekommunikationsnetz wechselt.

13. Endgerät nach Anspruch 13,
bei dem eine gespeicherte Menge von Zeichenketten um im besuchten Telekommunikationsnetz zur Erreichung von Diensten verwendete Zeichenketten vermindert wird, wenn das Endgerätes das besuchte Telekommunikationsnetz verläßt.

14. Knoten für ein Telekommunikationsnetz, mit
- einer Empfangseinheit zum Empfangen einer Dienstidentifikation,
- einem Speicher zur Speicherung einer Rufnummer,
- einer Verarbeitungseinheit zur Umsetzung der Dienstidentifikation in eine der Dienstidentifikation zugeordnete Rufnummer und
- Mitteln zum Aufbau einer Verbindung zu dem der Rufnummer zugeordneten Dienst.

15. Knoten nach Anspruch 14, mit
- einer Erkennungseinheit zur Erkennung einer Länderkennung aus einer Teilnehmeridentifikation und
- einer Zuordnungseinheit zur Zuordnung von Rufnummern zu Länderkennungen.

16. Knoten nach Anspruch 16, mit
- Mitteln zur Erkennung eines Sprachindikators und
- Mitteln zur Zuordnung von Rufnummern zu dem Sprachindikator.

17. Verwendung des Verfahrens nach Anspruch 1,
bei dem das mobile Telekommunikationsnetz ein GSM (Global System for Mobile communication) Netz ist.

18. Verwendung des Verfahrens nach Anspruch 1,
bei dem das mobile Telekommunikationsnetz ein UMTS (Universal Mobile Telecommunication System) Netz ist.

19. Computerprogramm, gespeichert auf einem computerlesbaren Medium, das ein Verfahren nach einem der Ansprüche 1 bis 9 umsetzt.
